# EUROPEAN PATENT SPECIFICATION

(11) **EP 3 553 923 B1**
(45) Date of publication and mention of the grant of the patent: **15.03.2023**
(21) Application number: 17878979.8
(22) Date of filing: 07.09.2017
(51) Int. Cl.: H02K 5/10, B25F 5/00, H02K 9/06, H02K 7/14

(54) **BRUSHLESS MOTOR AND ELECTRICALLY POWERED TOOL**
BÜRSTENLOSER MOTOR UND ELEKTRISCH ANGETRIEBENES WERKZEUG
MOTEUR SANS BALAIS ET OUTIL ÉLECTRIQUE

(30) Priority: 07.12.2016 JP 2016238033
(43) Date of publication of application: 16.10.2019
(73) Proprietor: Panasonic Intellectual Property Management Co., Ltd., Osaka-shi, Osaka 540-6207 (JP)
(72) Inventor: KITAMURA, Kota, Osaka-shi, Osaka 540-6207 (JP); SHIMIZU, Hidenori, Osaka-shi, Osaka 540-6207 (JP); HASHIMOTO, Koichi, Osaka-shi, Osaka 540-6207 (JP); TAKEYAMA, Atsushi, Osaka-shi, Osaka 540-6207 (JP); YAMANE, Tsuyoshi, Osaka-shi, Osaka 540-6207 (JP)
(74) Representative: Müller-Boré & Partner Patentanwälte PartG mbB
(86) International application number: PCT/JP2017/032346
(87) International publication number: WO 2018/105186

(56) References cited:
- EP-A2- 2 728 715
- WO-A2-2007/081033
- JP-A- 2001 112 208
- JP-A- 2008 272 869
- JP-A- 2013 021 903

## Description

The present disclosure relates to a brushless motor of an inner rotor type.

Japanese Unexamined Patent Application Publication No. 2016-86579 discloses a brushless motor of an inner rotor type used as a driving source for an electric power tool such as a drill driver and an impact driver. The brushless motor disclosed in Japanese Unexamined Patent Application Publication No. 2016-86579 is comprised of a stator core, an insulator, a coil, a rotor, a shaft, and a fan, and the stator core is fixed to the motor housing or the tool main body.

In a brushless motor of an inner rotor type, the rotor is rotatably provided radially inward of the stator core and at a predetermined interval (air gap) from the stator core. The fan has the role of cooling the coil by being rotated in tandem with the shaft to induce a flux of air.

According to the brushless motor disclosed in Japanese Unexamined Patent Application Publication No. 2016-86579, the fan also sends air to the air gap between the rotor and the stator core so that the dust may be collected on the rotor or the stator core. It should particularly be noted that, if metallic powder is sent along with air, the motor property may be deteriorated as the metallic powder is adsorbed to the magnet on the rotor side.

JP 2001 112208 A describes a rotary machine that is provided with a rotor to which a rotating shaft is integrally attached and in which permanent magnets are arranged, case members which are supported by the shaft on both sides of the rotor in the axial direction in a state that the members can be rotated freely relatively to each other, and a stator which is supported by the members so as to cover the outer peripheral surface of the rotor with a clearance. To the stator, dust covers which cover the portions of the external surface of the rotor not covered by the stator are attached.

JP 2001 112208 A discloses the preamble of claim 1.

JP 2008 272869 A describes an insulating member having a stator covering part for insulating teeth and a coil from each other by covering the teeth and an annular part forming a female screw hole is held on a rear end side of the stator by winding the coil around it. The circuit substrate is fixed to let a front face of the circuit substrate adhere closely to the insulating member by screw-fitting a male screw into the female screw hole to cover the whole annular opening formed by an end face of the annular part of the insulating member. The front face of the circuit substrate is provided with a Hall element for detecting a rotation position of a rotor, and a rear face of the circuit substrate is provided with an FET being a switching element.

WO 2007/081033 A2 describes an electric tool comprising a generally cylindrical yoke, a plurality of magnets fixed through a circumferential clearance to the inner circumference of said yoke, an armature rotatably arranged on the inner side of said yoke through a radial clearance between said yoke and the magnets, and a dust guard fitted in one axial end of said yoke. The dust guard is equipped integrally with a plurality of engaging protrusions engaging with the circumferential clearance between said magnets in said yoke.

The disclosure addresses the above-described issue, and a general purpose thereof is to provide a structure capable of preventing foreign materials from entering the air gap between the rotor and the stator core without inhibiting the performance of cooling the coil.

A brushless motor according to an embodiment of the present disclosure includes the features of claim 1.

Another embodiment of the present disclosure relates to an electric power tool according to claim 5.
Fig. 1 is an overview of an electric power tool according to an embodiment;
Fig. 2 is a perspective view showing an axial cross section of the motor;
Fig. 3 shows an exemplary structure of the protective member;
Fig. 4 shows a cross section of the motor perpendicular to the axis; and
Fig. 5 shows a variation of the protective member.

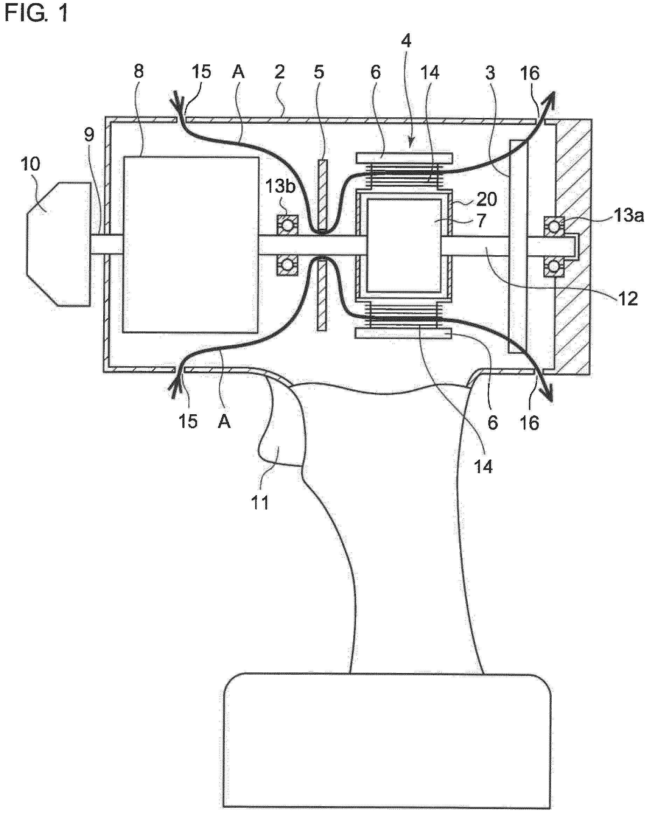

Fig. 1 is a schematic view of a part of an electric power tool according to an embodiment of the disclosure. The electric power tool 1 includes, in a housing 2, a fan 3 located toward the rear end, a motor 4 located in front of the fan 3, a circuit board 5 located in front of the motor 4, and a driving block 8 located in front of the circuit board 5. The driving block 8 includes an output shaft 9. A chuck mechanism 10 is coupled to the output shaft 9 so that a front-end tool such as a drill and a driver is attachable. The driving block 8 includes a power transmission unit that transmits the rotational force of the motor 4 to the front-end tool. The grip of the housing 2 is provided with a user operation switch 11 manipulated by the operator. When the operator pulls the user operation switch 11, the motor 4 is rotated, and the output shaft 9 of the driving block 8 drives the front-end tool.

The motor 4 is a brushless motor of an inner rotor type and includes a stator 6 fixed to the housing 2, a rotor 7 including a plurality of permanent magnets, and a shaft 12. The shaft 12 is attached to the rotor 7 and is rotatably supported by bearings 13a, 13b fixed directly or indirectly to the housing 2.

The stator 6 is comprised of a stator core and an insulator that covers the stator core. A coil is wound around the insulator that covers the teeth part of the stator core to form a coil part 14 for magnetizing the teeth part. The rotor 7 is located inward of the stator core at a predetermined interval (air gap) from the end of the teeth part.

The circuit board 5 carries a switching element such as a field effect transistor (FET) and an insulated gate bipolar transistor (IGBT) to build an inverter circuit and supplies a driving current to the coil part 14 of the stator 6. The circuit board 5 includes an opening for guiding the shaft 12, and the gap between the opening and the shaft 12 forms a flow passage for the cooling air.

The driving block 8 includes a substantially hollow cylindrical gear case, and the gear case is fixed to a support member provided in the housing 2 as a projection (not shown). A power transmission unit that transmits the rotational force of the motor 4 to the front-end tool attached to the chuck mechanism 10 is provided in the gear case. The power transmission unit may include a planetary gear deceleration mechanism in mesh with a pinion gear fitted to the shaft 12.

A plurality of air inlet ports 15 are formed in the housing 2 to the side of or in front of the driving block 8. For example, the air inlet port 15 may be a rectangular slit. A plurality of air outlet ports 16 are formed toward the back end of the housing 2.

The fan 3 is coupled to the shaft 12 behind the motor 4 and is rotated in tandem with the shaft 12. When the operator pulls the user operation switch 11, the shaft 12 is rotated and the fan 3 is rotated accordingly. The arrow A denotes the flow of air taken into the housing 2 from the air inlet port 15 as the fan 3 is rotated. The air flowing in from the air inlet ports 15, cools the side of the driving block 8 and the circuit board 5, passes through the gap between the opening at the center of the circuit board 5 and shaft 12, cools the coil part 14 of the stator 6, and is discharged outside from the air outlet ports 16. The air inlet ports 15 may be formed in the neighborhood of the circuit board 5 to increase the efficiency of cooling the circuit board 5. The air flowing in from the air inlet port 15 may pass through a flow passage other than the gap between the opening at the center of the circuit board 5 and the shaft 12 to cool the coil part 14.

The motor 4 according to the embodiment includes a protective member 20 that houses the rotor 7 and is located between the yoke part of the stator 6 and the rotor 7. The fan 3 is located outward of the protective member 20, and the protective member 20 forms a cylindrical closed space that houses the rotor 7 without being interposed between the end face of the teeth part of the stator 6 and the rotor 7. The protective member 20 restricts the inflow of air to the air gap between the rotor 7 and the end of the teeth part and prevents foreign materials from entering the space, by enclosing the rotor 7 in the cylindrical closed space. The term "closed space" shall mean a substantially closed space. A hole for dissipating heat may be formed in a part. In essence, the cylindrical closed space formed by the protective member 20 is configured to house the rotor 7 and to substantially restrict the inflow of air to prevent foreign materials from entering inside.

The protective member 20 forms the cylindrical closed space radially inward of the coil part 14 provided in the teeth part. This causes the coil part 14 to be located outward of the protective member 20 so that the cooling by the air flow is not impeded.

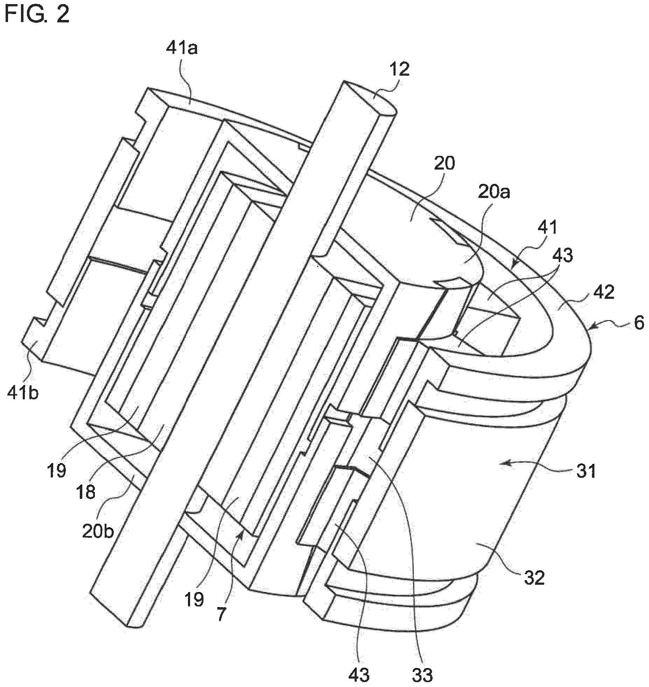

Fig. 2 is a perspective view showing an axial cross section of the motor 4 according to the embodiment. The motor 4 includes the stator 6, the rotor 7, and the shaft 12. For ease of view, illustration of the coil part 14 is omitted.

The stator 6 is comprised of a stator core 31 and an insulator 41 that insulates the stator core 31 from the coil part 14 electrically. The stator core 31 includes an annular yoke part 32 and a plurality of teeth parts 33 that projects radially inward from the inner circumferential surface of the yoke part 32. The insulator 41 includes a yoke insulation part 42 that insulates the yoke part 32 from the coil part 14 and a teeth insulation part 43 that insulates the teeth part 33 from the coil part 14.

The insulator 41 is comprised of two insulator parts 41a, 41b set in the stator core 31 from above and below. Referring to Fig. 2, the insulator parts 41a, 41b are set in the stator core 31 at a distance from each other. Alternatively, the insulator parts 41a, 41b may be set such that they are in contact with each other. Even if the insulator parts 41a, 41b are spaced apart so that a part of the stator core 31 is exposed, the yoke insulation part 42 is located radially inward of the yoke part 32, and the coil is tightly wound around the teeth insulation part 43 projecting away from the teeth part 33 in the circumferential direction. Therefore, insulation between the coil part 14 and the stator core 31 is not impaired.

The rotor 7 is a member rotated around the central axis of the yoke part 32 and is located radially inward of the stator core 31 at a predetermined interval from the end of the teeth part 33. The rotor 7 includes a columnar rotor core 18 and a plurality of permanent magnets 19 located in the rotor core 18. The shaft 12 is fixed to the rotor core 18 and is rotated in tandem with the rotor 7.

The protective member 20 according to the embodiment is comprised of the first protective member 20a and the second protective member 20b. The first protective member 20a and the second protective member 20b house the rotor 7 in the cylindrical closed space by sandwiching the rotor 7 from above and below and being latched to each other.

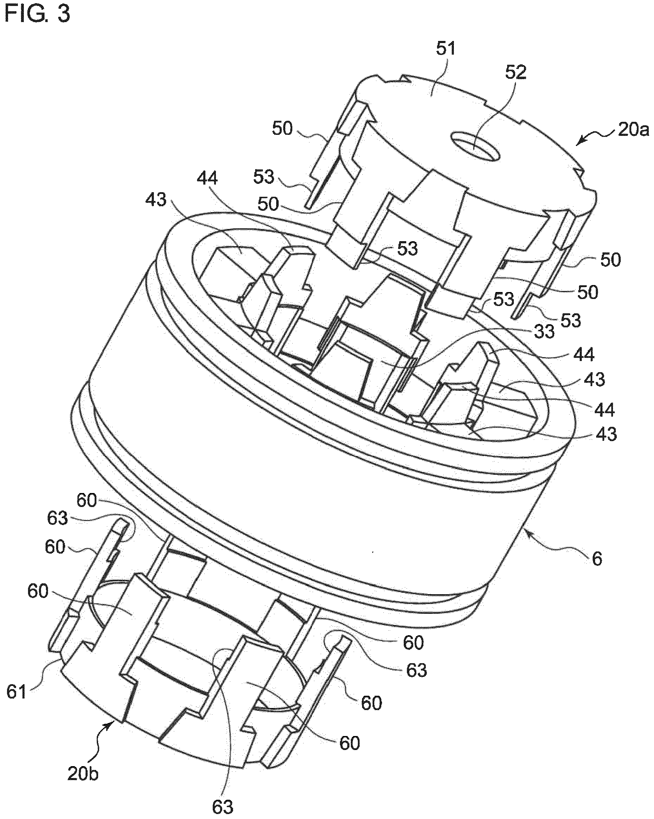

Fig. 3 shows an exemplary structure of the first protective member 20a and the second protective member 20b. In Fig. 3, illustration of the rotor 7 and the coil part 14 is omitted. The innermost circumference of the stator 6 is comprised of the end of the teeth part 33 and the end of the teeth insulation part 43. As illustrated, the end of the teeth insulation part 43 includes a rising part 44 that rises in the axial direction to prevent the coil from being unwound. The first protective member 20a and the second protective member 20b are configured to have a shape fitted to the rising part 44 of the teeth insulation part 43.

The first protective member 20a includes a lid part 51 having a substantially cylindrical outer circumference and a plurality of wall parts 50 extending from the outer circumference of the lid part 51 in the axial direction. The lid part 51 forms the end face of the cylindrical closed space that houses the rotor 7. A shaft guide hole 52 in which the shaft 12 is inserted is formed in the lid part 51. The wall parts 50 are stuck between the teeth part 33 and the end of the teeth insulation part 43 of the stator 6 adjacent to each other. By being located between the teeth part 33 and the end of the teeth insulation part 43, the plurality of wall parts 50 form the side surface of the cylindrical closed space along with the teeth part 33 and the end of the teeth insulation part 43.

Similarly, the second protective member 20b includes a lid part 61 having a substantially cylindrical outer circumference and a plurality of wall parts 60 extending from the outer circumference of the lid part 61 in the axial direction. The lid part 61 forms the end face of the cylindrical closed space that houses the rotor 7. A shaft guide hole in which the shaft 12 is inserted is formed in the lid part 61. The wall parts 60 are stuck between the teeth part 33 and the end of the teeth insulation part 43 of the stator 6 adjacent to each other. By being located between the teeth part 33 and the end of the teeth insulation part 43, the plurality of wall parts 60 form the side surface of the cylindrical closed space along with the teeth part 33 and the end of the teeth insulation part 43.

A latching part 53 of the wall part 50 in the first protective member 20a and a latching part 63 of the wall part 60 in the second protective member 20b are structured to be latched to each other when they abut each other. This fixes the first protective member 20a and the second protective member 20b. The first protective member 20a and the second protective member 20b may be fixed by another means.

For example, the second protective member 20b may not be provided with the wall parts 60 and be comprised only of the lid part 61, the wall parts 50 of the first protective member 20a may be sized to reach the lid part 61 of the second protective member 20b, and the lid part 61 and the ends of the wall parts 50 may be fixed by screws of a nonmagnetic material. Alternatively, the lid part 51 and the wall parts 50 of the first protective member 20a may be separate members, and, similarly, the lid part 61 and the wall parts 60 of the second protective member 20b may be separate members so as to form the protective member 20 from three or more members. The protective member 20 may be formed by the two lid parts 51, 61, and the plurality of joined wall parts in which the wall parts 50 and the wall parts 60 are joined. Alternatively, a pair of opposite ribs may be formed in the housing 2 of the electric power tool 1, and the axial movement of the first protective member 20a and the second protective member 20b may be restricted by locating the first protective member 20a and the second protective member 20b abutting each other between the ribs. In this case, the lid of the first protective member 20a or the second protective member 20b may be omitted so that at least one of the ribs may function as the lid of the protective member 20. Alternatively, a plurality of extensions extending from the rib in the axial direction may be formed so that the extensions may function as the wall parts of the protective member 20.

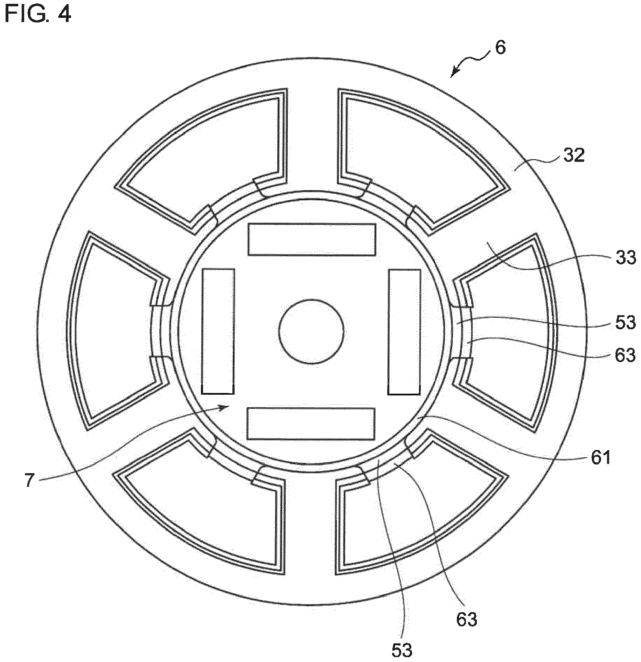

Fig. 4 shows a cross section of the motor 4 according to the embodiment perpendicular to the axis. Fig. 4 shows a state of the motor 4 severed at the position of the teeth part 33. The latching part 53 of the wall part 50 of the first protective member 20a and the latching part 63 of the wall part 60 of the second protective member 20b are latched between the ends of the adjacent teeth part 33.

By forming the cylindrical closed space, the protective member 20 not only inhibits air from flowing into the space around the rotor 7 but also inhibits the heat generated in the coil part 14 from being conducted to the rotor 7. In the case the rotor 7 includes, as the permanent magnet 19, a neodymium magnet, which is characterized by a low heat resistance, the protective member 20 maintains the stable motor property by reducing heat conduction from the coil part 14 to the rotor 7.

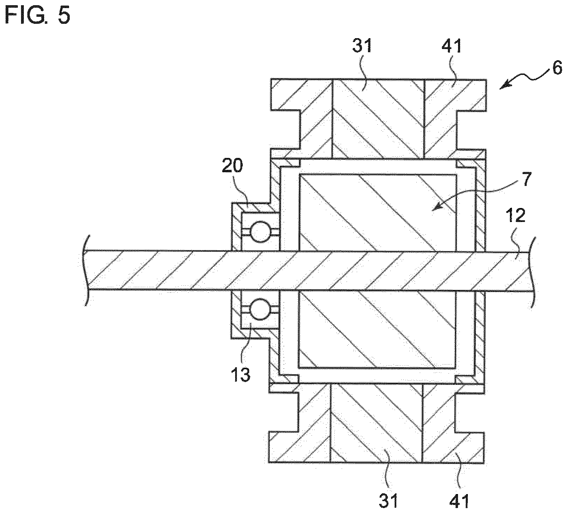

Fig. 5 shows a variation of the protective member 20. The protective member 20 has a space for mounting a bearing 13. By mounting the bearing 13 in the protective member 20, the dust tightness of the bearing 13 is improved.

Described above is an explanation based on an exemplary embodiment. The embodiment is intended to be illustrative only.

Although it is described in the embodiment that the protective member 20 forms the cylindrical closed space that houses the rotor 7, a heat dissipating hole for venting the heat in the closed space to outside may be provided in the cylindrical closed space. For the purpose of restricting the inflow of air from outside into the cylindrical closed space, the heat dissipating hole may be formed in the direction perpendicular to the direction of travel of air flow caused by the fan 3. For example, the heat dissipating hole may be formed by providing a gap in the portion of latching between the first protective member 20a and the second protective member 20b.

In the electric power tool 1 according to the embodiment, the fan 3, the motor 4, and the circuit board 5 are arranged in the stated order from the back side, but the arrangement may be as desired. For example, the circuit board 5, the motor 4, and the fan 3 may be arranged in this order from the back side. Alternatively, the circuit board 5 may be located at a position distanced from the shaft 12.
In the case the fan 3 is located substantially at the axial center in the housing 2, the directions of intake and discharge of air may be reversed.

Fig. 1 shows that the shaft 12 is rotatably supported by the two bearings 13a, 13b. For example, the bearing 13a may be fixed to the housing 2, and the bearing 13b may be fixed to a motor mount. The insulator 41 according to the embodiment is formed such that the two insulator parts 41a, 41b sandwich the stator core 31 from above and below, but the stator core 31 and the insulator 41 may be molded as an integrated unit.

## Claims

1. A brushless motor (4) comprising:
a stator core (31) including an annular yoke part (32);
a coil (14);
a rotor (7) located inward of the stator core (31); and
a protective member (20) located between the yoke part (32) and the rotor (7), the protective member (20) comprising a first protective member (20a) and a second protective member (20b) housing the rotor (7); the brushless motor (4) being **characterised in that**:
the stator core (31) includes a plurality of teeth parts (33) projecting from an inner circumferential surface of the yoke part (32);
the motor (4) comprises an insulator (41) that covers the yoke part (32) and the teeth parts (33);
the coil (14) is wound around the insulator (41) that covers the teeth parts (33);
the rotor (7) is located across a predetermined interval from an end of the teeth parts (33); and
the first protective member (20a) and the second protective member (20b) are latched to each other.

2. The brushless motor according to claim 1, wherein the protective member (20) includes a lid (51, 61) and a plurality of wall parts (50, 60) extending from the lid in an axial direction.

3. The brushless motor according to claim 2, wherein the wall parts (50, 60) are located between ends of adjacent teeth parts.

4. The brushless motor according to any one of claims 1 through 3, wherein an end of the teeth part and the protective member form a substantially closed space that houses the rotor.

5. An electric power tool (1) including, in a housing (2), a fan (3), a brushless motor (4) according to claim 1, and a driving block (8) that includes a power transmission unit for transmitting a rotational force of the brushless motor to a front-end tool.

6. The electric power tool according to claim 5, wherein the fan (3) is located outward of the protective member (20).

## Patentansprüche

1. Bürstenloser Motor (4), aufweisend:
einen Statorkern (31) mit einem ringförmigen Jochteil (32);
eine Spule (14);
einen Rotor (7), der sich einwärts des Statorkerns (31) befindet; und
ein Schutzelement (20), das sich zwischen dem Jochteil (32) und dem Rotor (7) befindet, wobei das Schutzelement (20) ein erstes Schutzelement (20a) und ein zweites Schutzelement (20b) aufweist, die den Rotor (7) aufnehmen, wobei der bürstenlose Motor (4) **dadurch gekennzeichnet ist, dass**:
der Statorkern (31) eine Vielzahl von Zahnteilen (33) aufweist, die von einer Innenumfangsoberfläche des Jochteils (32) vorstehen;
der Motor (4) einen Isolator (41) aufweist, der das Jochteil (32) und die Zahnteile (33) bedeckt;
die Spule (14) um den Isolator (41) gewickelt ist, der die Zahnteile (33) bedeckt;
der Rotor (7) sich in einem vorgegebenen Abstand von einem Ende der Zahnteile (33) befindet; und
das erste Schutzelement (20a) und das zweite Schutzelement (20b) miteinander verrastet sind.

2. Bürstenloser Motor nach Anspruch 1, wobei das Schutzelement (20) einen Deckel (51, 61) und eine Vielzahl von Wandteilen (50, 60) aufweist, die sich in einer Axialrichtung von dem Deckel erstrecken.

3. Bürstenloser Motor nach Anspruch 2, wobei die Wandteile (50, 60) sich zwischen Enden benachbarter Zahnteile befinden.

4. Bürstenloser Motor nach einem der Ansprüche 1 bis 3, wobei ein Ende des Zahnteils und das Schutzelement einen im Wesentlichen geschlossenen Raum bilden, der den Rotor aufnimmt.

5. Elektrisch angetriebenes Werkzeug (1), aufweisend, in einem Gehäuse (2), einen Lüfter (3), einen bürstenlosen Motor (4) nach Anspruch 1, und einen Antriebsblock (8), der eine Kraftübertragungseinheit zum Übertragen einer Drehkraft des bürstenlosen Motors an ein vorderendseitiges Werkzeug aufweist.

6. Elektrisch angetriebenes Werkzeug nach Anspruch 5, wobei sich der Lüfter (3) auswärts des Schutzelements (20) befindet.

## Revendications

1. Moteur sans balai (4), comprenant :
un noyau de stator (31) comportant une partie de culasse annulaire (32) ;
une bobine (14) ;
un rotor (7) situé à l'intérieur du noyau de stator (31) ; et
un élément de protection (20) situé entre la partie de culasse (32) et le rotor (7), l'élément de protection (20) comprenant un premier élément de protection (20a) et un deuxième élément de protection (20b) logeant le rotor (7) ; le moteur sans balai (4) étant **caractérisé en ce que** :
le noyau de stator (31) comporte une pluralité de parties de dent (33) faisant saillie depuis une surface circonférentielle intérieure de la partie de culasse (32) ;
le moteur (4) comprend un isolant (41) qui recouvre la partie de culasse (32) et les parties de dent (33) ;
la bobine (14) est enroulée autour de l'isolant (41) qui recouvre les parties de dents (33) ;
le rotor (7) est situé à travers un intervalle prédéterminé depuis une extrémité des parties de dent (33) ; et
le premier élément de protection (20a) et le deuxième élément de protection (20b) sont verrouillés l'un sur l'autre.

2. Moteur sans balai selon la revendication 1, dans lequel l'élément de protection (20) comporte un couvercle (51, 61) et une pluralité de parties de paroi (50, 60) s'étendant depuis le couvercle dans une direction axiale.

3. Moteur sans balai selon la revendication 2, dans lequel les parties de mur (50, 60) sont situées entre des extrémités de parties de dent adjacentes.

4. Moteur sans balai selon l'une quelconque des revendications 1 à 3, dans lequel une extrémité de la partie de dent et l'élément de protection forment un espace sensiblement fermé qui abrite le rotor.

5. Outil électrique (1) comportant, dans un boîtier (2), un ventilateur (3), un moteur sans balai (4) selon la revendication 1 et un bloc d'entraînement (8) qui comporte une unité de transmission de puissance pour la transmission d'une force de rotation du moteur sans balai à un outil d'extrémité frontale.

6. Outil électrique selon la revendication 5, dans lequel le ventilateur (3) est situé à l'extérieur de l'élément de protection (20).
